# EUROPEAN PATENT APPLICATION

(11) **EP 3 133 275 A1**
(43) Date of publication of application: **22.02.2017**
(21) Application number: 14889299.5
(22) Date of filing: 15.04.2014
(51) Int. Cl.: F02D 41/08, F02D 41/06, B60W 10/06

(54) **ENGINE CONTROL SYSTEM USING ISG**

(71) Applicant: Volvo Construction Equipment AB, 631 85 Eskilstuna (SE)
(72) Inventor: CHUNG, Yun-Hyun, Changwon-si Gyeongsangnam-do 641-763 (KR)
(74) Representative: Zimmermann, Tankred Klaus
(86) International application number: PCT/KR2014/003260
(87) International publication number: WO 2015/160002

(57) **Abstract**

An ISG control system for construction equipment for implementing an ISG (Idle Stop and Go) system under a work standby situation of the construction equipment and a control method thereof are disclosed. The ISG control system provides a switching function between an auto idle mode and an ISG mode by an operator's selection or under a specific condition when the work of the construction equipment is in a standby state. Further, the ISG control system controls a stop and a restart of an engine through sensing of the existence of corresponding work equipment within a predetermined range, and controls the stop and the restart of the engine through sensing of an operator's operation and gesture. After the engine stop, the ISG control system continuously senses the state of the equipment and provides a switching function to a low idle mode having a low RPM at a time when performance of a primary work is expected. The ISG control system controls the idling mode, engine stop, and engine start according to detailed requirements to prevent fuel consumption due to unnecessary no-load rotation.

## Description

### TECHNICAL FIELD

The present invention relates to a control technology using an ISG in a construction equipment.

### BACKGROUND OF THE INVENTION

In case of the general vehicles, various efforts using an ISG (Idle Stop and Go) have been made extensively worldwide in order to improve fuel efficiency and reduce green-house gases, where, by receiving input signals such as vehicle speed, engine rotation speed, and temperature of cooling water, an engine is stopped in an idle state, and after a predetermined time, restarted by controlling an accelerator and a brake pedal, thereby reducing fuel consumption by 10∼15%. However, a practically big difference in the application of ISG system exists, for example, between a passenger car with transmission and a construction equipment for engine-PUMP control.

A conventional engine control method that has been mainly applied for improving fuel efficiency is such that after an engine is started, an engine operates various works at the predetermined range of RPM (e.g. 2000∼2500 rpm) which is automatically changed to a low level of auto idle RPM (e.g. 1200 rpm) in a certain time after an operation is stopped, and then automatically changed to a RPM at a level lower than auto idle RPM(e.g. 800 rpm) if a certain time passes further from the state of auto idle RPM.

An engine RPM control circuit of the heavy construction equipment is configured in such a way that an auto idle input device and a key switch in cab that can preset auto idle engine RPM are interconnected to an engine controller, and an auto idle input switch and a driver's engine control dial are interconnected to said engine controller via a vehicle control unit. A vehicle control unit of an engine RPM control circuit of the heavy construction equipment sends RPM conversion signal to an engine controller which then automatically changes a predetermined engine RPM to auto idle engine RPM, or automatically changes an auto idle engine RPM to an idle engine RPM.

A conventional engine control circuit has problems of causing continuous fuel consumption and exhaustion to occur due to unnecessary idle operation even during standby time which takes much portion of the actual time required for the operations such as dumping and truck loading in the general construction equipment, for example, excavator.

### SUMMARY OF THE INVENTION

ISG (Idle Stop and Go) control system of the present invention relates to a system implementation of ISG and a method thereof, wherein, when a construction equipment is under standby state, various functions such as a change of engine rotation to an auto idle mode or engine stop, engine restart, and a change to a low idle mode are carried out depending on whether or not the respective requirement of the segmented conditions is satisfied. That is, it relates to an engine control for preventing fuel consumption due to unnecessary idle rotation by controlling engine RPM when a construction equipment is under non-working state.

### TECHNICAL SOLUTION

To achieve the above and other objects, in accordance with an embodiment of the present invention, there is provided a solution for construction equipment under standby state, comprising; selecting a mode change condition of either engine stop or auto idle mode by engine control unit (E-ECU) and vehicle control unit (V-ECU), stopping an engine in a condition of engine stop, detecting change to a working state of a construction equipment, restarting an engine at a working state, changing to a low idle engine RPM at the initial restart, and making normal operation of equipment for performing the major works.

### ADVANTAGEOUS EFFECT

In a construction equipment, a standby time exists at the intermediate step for preparing the actual work (major work), for example, gathering time for gathering materials for dumping, standby time of truck for loading, etc. A control of engine start during the standby time according to the segmented conditions of engine stop and restart prevents unnecessary idle rotation during standby time as well as fuel consumption taken by driving the hydraulic components, and reduces the environmentally adverse factors by preventing the emission of unnecessary exhaustion gases.

Furthermore, an ISG control method of construction equipment during standby time allows the existing posture to be maintained by using the basic hydraulic auxiliary pumps and enables the smooth restart, so that the work efficiency and the stability of overall equipment are not compromised. In addition, the good usability and operability can be kept even right after the restart by predetermining the conditions for engine start in detail so that the sense of difference is not accompanied by a sudden restart by ISG control.

### BRIEF DESCRIPTION OF THE DRAWINGS

Fig. 1 is the flow chart illustrating an ISG control method according to an embodiment of the present invention.
Fig. 2 represents the structure of the construction equipment including an ISG control system according to an embodiment of the present invention.

### DETAILED DESCRIPTION OF THE INVENTION

Hereinafter, the present invention will be described with reference to the accompanying drawings.

Although the present invention has been described with reference to the preferred embodiment, it is to be understood that various equivalent modifications and variations of the embodiments can be made by a person having an ordinary skill in the art without departing from the spirit and scope of the present invention as recited in the claims.

In order to explain clearly the present invention, the irrelevant parts have been omitted, and like reference numerals designate like elements throughout the specification.

Throughout the specification, unless explicitly described to the contrary, the "comprise" will be understood to imply the inclusion of stated elements but not the exclusion of any other elements.

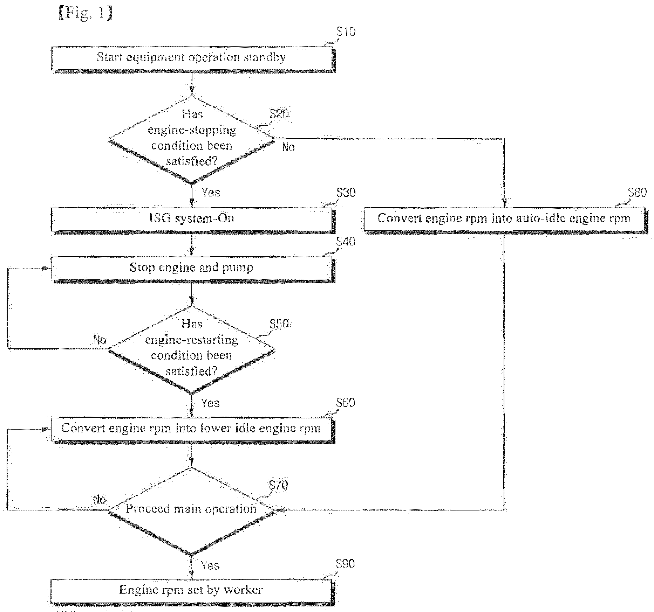

Fig. 1 is the flow chart illustrating an ISG control method according to an embodiment of the present invention.

An ISG system of a construction equipment and method thereof according to the present invention gets involved in the operation of the equipment from the point in time when the equipment is under a standby state. In order for ISG system to detect the conditions for engine stop or pump stop, first of all, the construction equipment should enter the standby state. Whether or not to operate a plurality of actuators or operation elements can be sensed by a plurality of sensors. Based on the data thus sensed, the operation state of equipment can be determined, and it is determined that the equipment is put under a standby state when the equipment is not working for a certain period of time, which is defined as the standby state (S10) as shown in the flow chart of Fig. 1.

An operator can determine either the control of engine stop or pump stop by getting ISG system involved, or the direct change to an auto idle mode. In case of auto idle mode, an engine RPM is switched to an auto idle engine RPM without ISG control of the engine RPM while the equipment is under standby. The auto idle engine RPM is the RPM good enough to carry out the major works of the equipment while it is under standby.

In case of getting ISG system involved, it proceeds with the step (S20) of determining the condition for engine stop after the construction equipment enters the standby state. The engine stop by ISG requires the possibility that the equipment stays at the standby state for a long enough time. Accordingly, the examples of the conditions (12) for engine stop are shown in the following, and if at least one of the examples are satisfied, ISG system stops the engine and pump, and enters the standby state. This may be also determined considering both the overall stability of the equipment during the standby time and the efficient time of standby.

### [Examples of the conditions for engine stop of equipment]

### 1. The condition for engine stop considering a work area

In case that the corresponding work equipment is not within a work area, that is, the corresponding work equipment such as dump truck, hauler, or excavator is not detected within the work area, ISG may stop engine. The construction equipment according to the present invention can detect the presence of the corresponding work equipment using the methods of a) to f) below.
a) a case where a distance measurement sensor (e.g. infrared sensor, ultrasonic sensor) of the construction equipment senses an access of the corresponding work equipment within a predetermined range;
b) a case where an operation recognition sensor at a front/rear position recognizes a target object;
c) a case where a target object is recognized through mutual direct/indirect proximity signal exchange with the corresponding work equipment;
d) a case where the corresponding work equipment is sensed by a mechanical device that can be directly contacted at a specific position in front of a work spot;
e) a case where the corresponding work equipment is sensed by a sensor that can sense a pass signal through an electrical signal transfer device; and
f) a case where the corresponding work equipment is sensed through radar irradiation at a specific angle

The construction equipment according to the present invention can stop the engine if the corresponding work equipment is not sensed within the certain range of work area by the methods described above.

### 2. The condition for engine stop considering the operator's state

The ISG control system according to the present invention detects an operation and a gesture of the operator using a 3D camera or a sensor, and determines the operator's non-working state or working state.

In addition, ISG control system according to the present invention can stop or restart the engine by determining if the operator's move makes an access to an actuator control unit using a 3D camera or a sensor. For example, if the operator does not make an access to the actuator control unit, the engine can be stopped by recognizing that the construction equipment is under non-working state. Later on, if it is detected by a sensor that the operator operates the actuator, the vehicle control unit can restart the engine by recognizing that the construction equipment enters the working state.

ISG control system according to the present invention can either stop or restart the engine by detecting if the operator within a cab makes an access to or contacts the control unit of the actuator, which is sensed by temperature sensor, motion sensor, proximity sensor, etc. For example, if the operator does not make an access to the actuator control unit for a certain period of time, the engine is stopped by recognizing that the construction equipment is under non-working state and later on, if the operator makes access to the actuator, the vehicle control unit can restart the engine by recognizing that the construction equipment enters the working state.
3. Besides, the conditions for engine stop can be preset depending on the signal states of the control unit.
   1) Off state of RCV(Remote Control Valve) operation signal
   2) Off state of motion sensor signal sensing boom/ arm/ bucket, etc.
   3) Off sate of drive signal
   4) On state of parking brake
   5) Other off states of actuator motion and removal of pump load

Either auto idle mode or ISG mode can be selected by the operator's decision, and automatically selected under the specific condition.

In the following is described the case that ISG mode gets involved in controlling engine RPM. As mentioned above, ISG system is involved (S30) if the condition for engine stop is satisfied at S20, and thus the engine and pump are stopped (S40) resulting in the reduction of fuel consumption while the construction equipment is under standby.

If the condition for engine stop is not satisfied at S20, the construction equipment changes to the auto idle mode (S80), and maintains the RPM that can operate the major works at any time. For example, if the corresponding work equipment is not detected within a work area of the construction equipment, or if the operator keeps contact on the actuator handling unit, the construction equipment can keep the auto idle engine RPM that can operate the major works at any time even under the standby state.

After the engine and pump stop at S40, the construction equipment proceeds to S50 and ISG system continues to detect whether the construction equipment is in a working state. In order to recognize that the construction equipment enters the working state, ISG system checks if the condition for engine restart is satisfied, in which said condition for engine restart is opposite to the condition for engine stop as described above.

For example, if it is detected that the corresponding work equipment is not present within a work area, ISG system recognizes that the standby state will continue for long time, and stops engine. Later on if it is detected that the corresponding work equipment is present within a work area, the engine is restarted so that the construction equipment can carry out the major works.

For another example, if it is detected that the operator is in non-working state, ISG system stops engine, and later on, if it is detected that the operator is in working state, the engine is restarted so that the construction equipment can carry out the major works.

In another method as a direct method by an operator, ISG system may either determine the restart condition by measuring the strength of handling a drive lever by the operator, or consider the restart method using on-off switch for restart.

When ISG system restarts the engine as the condition for restart is satisfied, the engine does not change to RPM high enough to immediately carry out the major works. After ISG system goes through engine stop and engine restart, it keeps RPM lower than that of auto idle mode to reduce the fuel consumption until the major works get started (S60). When the major works practically get started (S70), the engine RPM of construction equipment is changed to the engine RPM that the operator predetermines, and the major works are carried out (S90).

Even when the engine and pump are stopped by ISG signal, the ISG control unit (71) controls the operation of auxiliary pump in order to ensure the stability of equipment and keep the hydraulic pressure of the components necessary for the operation. Such ISG control unit maintains the operation unit in a right position, makes power source continuously providing power to a safety unit, and keeps the functions of various necessary units that make sure smooth operation in the restart.

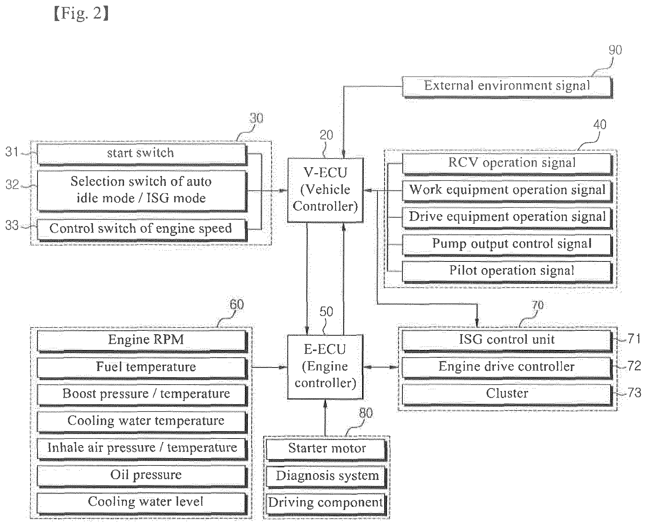

Fig. 2 represents the structure of the construction equipment including ISG control system according to an embodiment of the present invention.

The construction equipment according to an embodiment of the present invention comprises a sensor module receiving the external environment signals using at least one of a distance measurement sensor, a motion recognition sensor, a proximity sensor, a contact sensor, and a laser sensor, which is configured to determine the condition for engine stop and operate ISG (Idle Stop and Go) during the standby time of the construction equipment.

A vehicle control unit (20) receives the various signals from the sensors (40) and the control switches (30), controls engine speed, pump output, operation unit, etc., estimates the operation time of equipment, checks the defects of equipment, and transmits the data to a display. The vehicle control unit is also referred to as a vehicle controller or V-ECU (Vehicle controller). Based on said external environment signals, the vehicle control unit may have the function of detecting the presence of the corresponding work equipment within the predetermined range from said construction equipment.

The construction equipment according to an embodiment of the present invention may comprise a sensor module receiving the external environment signals and the operation signals of every part of the construction equipment (e.g. motion sensor, location sensor, temperature sensor, etc.), which is configured to determine the conditions for engine stop or restart. The engine is started by a start switch (31), and the vehicle control unit receives the input signals of the external environment signals (90) and the operation signals (40) of every part of the vehicle. When the construction equipment enters the standby state, the operator can choose whether or not to proceed in either auto idle mode or ISG mode using a selection switch (32) of auto idle mode / ISG mode.

In case of ISG mode, an engine control unit (E-ECU, 50) receives said ISG signal, and ISG control unit (71) receives the input signal for the operation state (40) of the construction equipment. The construction equipment according to an embodiment of the present invention comprises an engine sensor unit (60) configured to detect and transmit the signal of the operation state of the engine, and an engine drive controller (72) configured to control engine by receiving and transmitting the signal of the operation state of the construction equipment. According to an embodiment of the control of engine operation by ISG, if the presence of the corresponding work equipment within a certain range is detected, said engine control unit transmits ISG signal to the engine drive controller and can stop the engine, and if the presence of the corresponding work equipment is detected, said engine control unit changes the engine RPM of construction equipment to auto idle engine RPM.

Moreover, the construction equipment comprises a cluster that can display the engine start or stop by ISG, the possibility of engine start, the condition for engine stop, the condition for restart, the possibility of restart, etc.

After the engine is stopped as the corresponding work equipment is not detected, said vehicle control unit keeps checking the presence of said corresponding work equipment, and can restart the engine at the predetermined low idle engine RPM when said corresponding work equipment is detected.

According to another embodiment of the present invention, ISG system of construction equipment can control the engine by checking if the operator is in a working state or non-working state based on the operator's motion and posture.

This construction equipment include a sensor module for detecting the operator's motion and posture using at least one of 3D camera, temperature sensor, motion sensor and proximity sensor, which is configured to determine the condition for engine stop for ISG(Idle Stop and Go) under the standby state.

Furthermore, said construction equipment includes the vehicle control unit configured to determine the operator's state based on the said operator's motion and posture, and the engine control unit configured to transmit ISG signal to the engine drive controller and stop the engine in case of operator's non-working state and to change the engine RPM of construction equipment to an auto idle engine RPM in case of operator's working state.

The ISG system of construction equipment as configured as above can control the engine stop and start by detecting the operator's motion and the working state.

### INDUSTRIAL APPLICABILITY

The embodiments as described above are provided only for an example to describe the control method and the control system thereof for the construction equipment comprising ISG system. Accordingly, it is to be understood that various equivalent modifications and variations of the embodiments can be made by a person having an ordinary skill in the art without departing from the spirit and scope of the present invention..

## Claims

1. An ISG control method for construction equipment comprising:
receiving, by a sensor module, an external environment signal to determine an engine stop condition for ISG (Idle Stop and Go) when a work of the construction equipment is in a standby state;
detecting, by a vehicle control unit, whether corresponding work equipment exists based on the received external environment signal;
transmitting, by an engine control unit, an ISG signal to an engine drive controller to stop an engine if the existence of the corresponding work equipment is not detected; and
switching, by the engine control unit, an engine RPM of the construction equipment to an auto idle engine RPM if the existence of the corresponding work equipment is detected,
wherein the vehicle control unit determines that the corresponding work equipment exists if at least one of the followings are satisfied.
a) a case where a distance measurement sensor of the construction equipment senses an access of the corresponding work equipment within a predetermined range;
b) a case where an operation recognition sensor at a front/rear position recognizes a target object;
c) a case where a target object is recognized through mutual direct/indirect proximity signal exchange with the corresponding work equipment;
d) a case where the corresponding work equipment is sensed by a mechanical device that can be directly contacted at a specific position in front of a work spot;
e) a case where the corresponding work equipment is sensed by a sensor that can sense a pass signal through an electrical signal transfer device; and
f) a case where the corresponding work equipment is sensed through radar irradiation at a specific angle

2. The ISG control method according to claim 1, wherein after the existence of the corresponding work equipment is not detected and thus the engine is stopped, the vehicle control unit continuously checks the existence of the corresponding work equipment using the a) to f), and if the existence of the corresponding work equipment is sensed, restarts the engine with a preset low idle engine RPM.

3. An ISG control method for construction equipment comprising:
receiving, by a sensor module, an external environment signal to determine an engine stop condition for ISG (Idle Stop and Go) when a work of the construction equipment is in a standby state;
determining, by a vehicle control unit, an operator's state based on the received external environment signal;
transmitting, by an engine control unit, an ISG signal to an engine drive controller to stop an engine if it is determined that the operator's state is a non-working state; and
switching, by the engine control unit, an engine RPM of the construction equipment to an auto idle engine RPM if it is determined that the operator's state is a working state.

4. The ISG control method according to claim 3, wherein, in the step of determining the operator's state through the vehicle control unit, the vehicle control unit senses an operation and a gesture of the operator using a 3D camera or a sensor, and determines the operator's non-working state or working state.

5. The ISG control method according to claim 3, wherein, in the step of determining the operator's state through the vehicle control unit, the vehicle control unit senses an access to an actuator control device using a 3D camera or a sensor, and determines the operator's non-working state or working state.

6. The ISG control method according to claim 3, wherein, in the step of determining the operator's state through the vehicle control unit, the vehicle control unit senses the contact of an actuator operation device in a cab using at least one of a temperature sensor, a motion sensor, and a proximity sensor, and determines the operator's non-working state or working state.

7. The ISG control method according to claim 1 or 3, wherein either an auto idle mode or an ISG mode can be selected by the operator when the work is in the standby state.

8. The ISG control method according to any one of claims 3 to 6, wherein after the operator's state is determined to be a non-working state and thus the engine is stopped, the vehicle control unit continuously checks the operator's state, and if it is determined that the operator's state is changed from the non-working state to the working state, restarts the engine with a preset low idle engine RPM.

9. The ISG control method according to claim 2 or 8, further comprising a step of entering into a low idle mode by moving, by an operator, an operation lever with a predetermined strength or more, or by using an on-off switch in a state when the engine is stopped in an ISG mode.

10. An ISG control apparatus for construction equipment comprising:
a sensor module receiving an external environment signal using at least one of a distance measurement sensor, a motion recognition sensor, a proximity sensor, a contact sensor, and a laser sensor to determine an engine stop condition for ISG (Idle Stop and Go) when a work of the construction equipment is in a standby state;
a vehicle control unit determining whether corresponding work equipment exists within a preset range from the construction equipment based on the received external environment signal; and
an engine control unit transmitting an ISG signal to an engine driving controller to stop an engine if the existence of the corresponding work equipment is not detected, and switching an engine RPM of the construction equipment to an auto idle engine RPM if the existence of the corresponding work equipment is detected.

11. The ISG control apparatus according to claim 10, wherein after the existence of the corresponding work equipment is not detected and thus the engine is stopped, the vehicle control unit continuously checks the existence of the corresponding work equipment, and if the existence of the corresponding work equipment is detected, restarts the engine with a preset low idle engine RPM.

12. An ISG control apparatus for construction equipment comprising:
a sensor module sensing an operation and a gesture of an operator using at least one of a 3D camera, a temperature sensor, a motion sensor, and a proximity sensor to determine an engine stop condition for ISG (Idle Stop and Go) when a work of the construction equipment is in a standby state;
a vehicle control unit determining an operator's state based on the received operation and gesture of the operator; and
an engine control unit transmitting an ISG signal to an engine driving controller to stop an engine if it is determined that the operator's state is a non-working state, and switching an engine RPM of the construction equipment to an auto idle engine RPM if it is determined that the operator's state is a working state.

13. The ISG control apparatus according to claim 12, wherein after the operator's state is determined to be a non-working state and thus the engine is stopped, the vehicle control unit continuously checks the operator's state, and if it is determined that the operator's state is changed from the non-working state to the working state, restarts the engine with a preset low idle engine RPM.
